(19) Europäisches Patentamt
European Patent Office
Office européen des brevets

(11) **EP 1 794 895 B1**

(12) **EUROPÄISCHE PATENTSCHRIFT**

(45) Veröffentlichungstag und Bekanntmachung des Hinweises auf die Patenterteilung:
**07.11.2018   Patentblatt 2018/45**

(51) Int Cl.:
***H04B 3/54*** *(2006.01)*

(21) Anmeldenummer: **05798001.3**

(22) Anmeldetag: **29.09.2005**

(86) Internationale Anmeldenummer:
**PCT/EP2005/010544**

(87) Internationale Veröffentlichungsnummer:
**WO 2006/034866 (06.04.2006 Gazette 2006/14)**

(54) **VERFAHREN UND VORRICHTUNG ZUR DATEN]BERTRAGUNG F]R WECHSELSPANNUNGSNETZE**

DATA TRANSMISSION METHOD AND DEVICE FOR A/C SYSTEMS

PROCEDE ET SYSTEME DE TRANSMISSION DE DONNEES POUR RESEAUX A TENSION ALTERNATIVE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.09.2004   DE 102004047082**

(43) Veröffentlichungstag der Anmeldung:
**13.06.2007   Patentblatt 2007/24**

(73) Patentinhaber: **Beck, Wilfried**
**65191 Wiesbaden (DE)**

(72) Erfinder: **HOFMANN, Ralph**
**35683 Dillenburg (DE)**

(74) Vertreter: **Katscher Habermann Patentanwälte**
**Dolivostraße 15A**
**64293 Darmstadt (DE)**

(56) Entgegenhaltungen:
**EP-A2- 1 756 681         US-A- 4 642 637**
**US-A1- 2004 037 221**

**Beschreibung**

Bekannt sind nach dem gegenwärtigen Stand der Technik Verfahren zum individuellen Ansteuern von Geräten, wobei Adress- und Steuerdaten während der Nulldurchgänge der Versorgungs-Wechselspannung übertragen werden (vgl. US 5 491 463 A), Von Nachteil ist dabei, dass bei diesem Verfahren jeweils ein eigener 120kHz-Generator erforderlich ist, um Burst-Signale zu erzeugen und der Empfänger mit vergleichsweise aufwendigen Detektor-Schaltungen ausgestattet sein muss.

Weiterhin bekannt ist ein Verfahren, das über verschieden lange Nullschaltungen oder Austastungen der Versorgungsspannungen verschiedene Bit-Arten definiert und es dem Empfänger mit einer einfachen Schaltung ermöglicht, die Bit-Arten zu detektieren und die jeweiligen Steuerinformationen auszuwerten (vgl. EP 1 134 910 A2). Bei diesem Datenübertragungsverfahren ist es technisch möglich, Informationen an mehrere, an eine gemeinsame Wechselspannungsversorgung angeschlossene Verbraucher zu übertragen, indem um den Nulldurchgang der Spannung eine Leitungsunterbrechung ("Austastung") erfolgt. Systembedingt dürfen die Verbraucher hierbei jedoch keine induktiven oder kapazitiven Lastanteile besitzen, da diese die beschriebene Spannungsaustastung im Nulldurchgang der Spannungskurve stören würden. Daher müssen die Verbraucher bei diesem System nur rein ohmsches Verhalten, das nur durch die Gleichung (2) beschrieben ist, bzw. einen Phasenwinkel phi von Null bzw. praktisch Null aufweisen, da andernfalls die bei diesem Verfahren um den Nulldurchgang der Spannung vorgenommene Austastung durch den vom Verbraucher eingeprägten Blindstrom überdeckt werden würde.

Die im Stand der Technik beschriebenen Verfahren weisen den Nachteil auf, dann keine Datenübertragung vornehmen zu können, wenn beliebige induktive oder kapazitive Lasten - wie beispielsweise Elektromotoren, Küchengeräte, elektrisch betriebene Werkzeuge, Leuchtstofflampen, Elektronikgeräte wie PCs, Fernseher und HiFi-Anlagen - an dem Netzstrang betrieben werden, auf dem die Datenübertragung vorgenommen werden soll.

Hierdurch ist auf die im Stand der Technik vorgeschlagenen Lösungen das normale Stromnetz eines Gebäudes gar nicht oder nur eingeschränkt zur Datenübertragung geeignet.

Die EP 1 756 681 A2 offenbart ein Verfahren zur Modulation der Wirkleistung durch mindestens einen Modulator zur selektiven Veränderung der Wirkleistung in mindestens einem angeschlossenen Verbraucher in beliebigen Zeitpunkten der Sinusschwingung, umfassend eine niederohmige Spannungsquelle, bei einem oder mehreren Verbrauchern in einem Wechselspannungsenergieversorgungsnetz zwecks Übermittlung von Informationen über die Energieversorgungsleitung durch gezielt variierte Wirkleistung im angeschlossenen Verbraucher, wobei zur Übermittlung der Informationen Variationen des Momentanwertes der Wirkleistung auf ein beliebiges Maß durchgeführt werden, wobei der Modulator aus einem Umschalter, der Spannungsquelle und einer Steuereinheit besteht, wobei die Steuereinheit den zeitlichen Kurvenverlauf der eingespeisten Netzwechselspannung erfasst und in festgelegten Phasenwinkeln der Sinuswelle den Umschalter so ansteuert, dass die Verbindung zwischen einer Verbraucherzuleitung und einer Einspeiseleitung unterbrochen wird und stattdessen die Spannungsquelle die auf der Verbraucherzuleitung herrschende Spannung bestimmt und die Steuereinheit die Verbraucherzuleitung nach einer konstruktiv oder per Software festgelegten Zeit dann wieder von der Spannungsquelle auf die Einspeiseleitung schaltet.

Im Weiteren beschreibt die US 2004/037221 A1 ein Verfahren zur Modulation der Wirkleistung durch mindestens einen Modulator, umfassend eine niederohmige Spannungsquelle. bei einem oder mehreren Verbrauchern in einem Wechselspannungsenergieversorgungsnetz zwecks Übermittlung von Informationen über die Energieversorgungsleitung durch gezielt variierte Wirkleistung im angeschlossenen Verbraucher wobei zur Übermittlung der Informationen Variationen des Momentanwertes der Wirkleistung auf ein beliebiges Maß durchgeführt werden.

Aufgabe ist es, ein Verfahren und eine Vorrichtung vorzusehen, welche eine Datenübertragung im Wechselspannungsnetz in jeder Belastungssituation erlaubt, wie beispielsweise durch ohmsche und/oder kapazitive und/oder induktive und/oder sonstige, in einem Wechselspannungsnetz übliche Verbraucher, insbesondere auch außerhalb der Nulldurchgänge - und somit ein jederzeit gezieltes Ansteuern der angeschlossenen Empfänger zu ermöglichen.

Diese Aufgabe wird durch die unabhängigen Ansprüche gelöst. Vorteilhafte Ausgestaltungen ergeben sich aus den Unteransprüchen.

Für das Verfahren der Informationsübertragung wird eine Einheit, die Informationen in eine Wechselstrom-Energieversorgungsleitung einprägt ("Sender" oder "Modulator"), mindestens eine weitere Einheit, die die vom Modulator übermittelten Informationen auswertet ("Empfänger" oder "Demodulator") - wobei der Modulator und der Demodulator über eine elektrische Leitung verbunden sind, die üblicherweise die Energieversorgungsleitung zu den Verbrauchern darstellt - und weiterhin über einen Wechselspannungsanschluss als Energiequelle für angeschlossene Verbraucher benötigt.

Die Wirkleistungsumtastung, die die Informationsübertragung bewirkt, ist in dem hier vorgestellten Verfahren dadurch gekennzeichnet, dass zum Zeitpunkt der Umtastung in dem (den) angeschlossenen Verbraucher(n) der Momentanwert der Wirkleistung durch den Modulator verändert wird.

Der Empfänger enthält die geeignete Technik, um die Abweichung vom normalen Sinusverlauf der Wirkleistung als eingeprägte Modulation zu erkennen und auszuwerten.

Zur Übermittlung der Informationen werden Variationen des Momentanwertes der Wirkleistung auf ein beliebiges Maß durch Vergrößerung oder Verkleinerung durchgeführt, so dass diese charakteristischen Veränderungen von einem geeigneten Empfänger ausgewertet

Eine für den Betrieb des Verfahrens erforderliche Vorrichtung bzw. ein System kann beliebig viele Verbraucher und Demodulatoren enthalten. Die Logik der Informationsübermittlung (Protokoll) kann so gestaltet werden, dass eine einzelne durch eine Umtastung codierte Informationseinheit oder mehrere dieser zusammengenommen nur einen einzelnen Demodulator ansprechen oder mehrere Demodulatoren gleichzeitig. Es ist auch möglich, dass eine übermittelte Information keinen Demodulator anspricht bzw. in einem speziellen System kein Demodulator vorhanden ist, der dadurch angesprochen wird.

Die Erfindung betrifft somit ein Verfahren zur Modulation der Wirkleistung bei einem oder mehreren Verbrauchern in einem Wechselspannungsenergieversorgungsnetz zwecks Übermittlung von Informationen über die Energieversorgungsleitung durch gezielt variierte Wirkleistung im angeschlossenen Verbraucher. Unter "Modulation" wird im folgenden verstanden, den Momentanwert der Wirkleistung in einem an die mit Informationen beaufschlagte Netzleitung angeschlossenen ohmschen Verbraucher in einer charakteristischen, vom normalen Sinusverlauf abweichenden Weise zu verändern.

Diese Veränderung ist zeitlich begrenzt auf einen Bruchteil einer Sinushalbwelle und in der Amplitude so ausgestaltet, daß sie im zeitlichen Mittel über eine Sinushalbwelle keine spürbare Veränderung in der abgegebenen Leistung des Verbrauchers darstellt. Das heißt, daß diese Veränderung typischerweise deutlich unter einem Prozent der unmodulierten Leistung liegt, aber im Zeitpunkt der Modulation der Momentanwert der Leistung typischerweise um mehr als 10% verändert wird.

Dabei liegt die Modulationsdauer, während der der Momentanwert verändert wird typischerweise im Bereich von 10 bis 100 Mikrosekunden.

Dies bringt den Vorteil mit sich, dass die vom Verbraucher abgegebene Leistung keine durch die Modulation bedingte Schwankungen zeigt.

Ein weiterer Vorteil dieser Modulation ist, dass durch solches Aufprägen einer Variation des Momentanwertes der Wirkleistung wie beschrieben, die Information sehr zuverlässig über die Netzleitung transportiert und von einer geeigneten Empfängerschaltung mit geringem Aufwand ebenso zuverlässig ausgewertet werden kann.

Insbesondere kann dadurch eine Modulation im Hochfrequenzbereich vermieden werden, die regelmäßig im beschriebenen Einsatzbereich der Übertragung Schwierigkeiten und unerwünschte Wechselwirkungen durch Übersprechen und/oder Signalverlust durch ungünstige Hochfrequenzeigenschaften der Netzleitung zeigt.

Ferner kann auch die Auswerteschaltung durch den Verzicht auf Hochfrequenzbauteile sehr einfach, und damit preiswert und kompakt gehalten werden.

Die Erfindung betrifft dadurch ebenso ein Verfahren zum Steuern von mehreren an eine elektrische Energieversorgungsleitung angeschlossenen Verbrauchern, indem zur Modulation der Wirkleistung bei einem oder mehreren Verbrauchern in einem

Wechselspannungsenergieversorgungsnetz zwecks Übermittlung von Informationen über die Energieversorgungsleitung Wirkleistung gezielt variiert wird. Hierbei ist der Momentanwert der Wirkleistung gemeint.

Hierfür liegt dem Fachmann folgendes Verständnis des Fachbegriffs "Wirkleistung" zu Grunde: In der Wechselstromtechnik wird eine Wechselspannung beschrieben als eine Spannung, deren Momentanwert zeitlich prinzipiell nach dem Verlauf einer Sinuskurve variiert:

$$(1) \qquad U(t) = \hat{U} * \sin(2 * Pi * f * t)$$

U(t) = Momentanwert der Spannung,
$\hat{U}$ = Spitzenwert der Spannung,
Pi = 3,141592654
f = Nennfrequenz der Wechselspannung
t = die Zeit in Sekunden
sin = Sinusfunktion

Die mathematische Sinusfunktion ist mit dem Winkel im Bogenmaß geeicht. Wird eine solche Spannung zur Energieversorgung von elektrischen Verbrauchern eingesetzt, so unterscheidet man diese Verbraucher grundsätzlich in zwei Gruppen:

    a) ohmsche Verbraucher (so genannte Wirklasten),
    b) induktive oder kapazitive Verbraucher (so genannte Blindlasten),

Die ohmschen Verbraucher zeichnen sich dadurch aus, dass der von ihnen aufgenommene Momentanwert des Stromes I(t) stets der Proportionalitätsgleichung

$$(2) \qquad I(t) = \hat{U} * \sin(2 * Pi * f * t)/R = U(t)/R$$

entspricht. Dieser Strom wird Wirkstrom genannt.

    I(t) = Momentanwert des vom Verbraucher aufgenommenen Stromes,
    R = Ohmscher Widerstand des Verbrauchers.

Die induktiven oder kapazitiven Verbraucher zeichnen sich dadurch aus, dass zur Beschreibung des Stromverlaufes in die Gleichung (2) ein Korrekturwert eingefügt werden muss:

$$(3) \qquad I(t) = \hat{U} * \sin(2*Pi*f*t+phi)/X$$

Dieser Strom wird Blindstrom genannt.

phi = Phasenwinkel,
X = Blindwiderstand des Verbrauchers; tritt an die Stelle des ohmschen Widerstandes in (2).

Der so genannte Phasenwinkel phi beträgt dabei für kapazitive Lasten Pi/2 und für induktive Lasten -Pi/2. Der Blindwiderstand X ist ein virtueller Widerstand, der keine konstante Größe ist, sondern - im Gegensatz zum ohmschen Widerstand R - von der Frequenz f abhängt. Er ist eine Rechengröße, der in der Theorie der Wechselstromtechnik eine zentrale Bedeutung zukommt. In der Praxis kommen häufig beide Lastformen als Kombination vor. Der Momentanwert des Stromes kann dann durch die Gleichung

$$(4) \qquad I(t) = \hat{U} * \sin(2*Pi*f*t+phi)/Z$$

beschrieben werden, wobei der Phasenwinkel phi jetzt beliebige Werte annehmen kann. Dieser so genannte Scheinstrom stellt eine Kombination aus Wirk- und Blindstrom dar. Die jeweiligen Anteile von Wirk- und Blindstrom am Scheinstrom können rechnerisch bestimmt werden. Man kann daher grundsätzlich von einem Wirkstrom und einem Blindstrom sprechen, der in dem Scheinstrom enthalten ist.
Z = Scheinwiderstand des Verbrauchers.

Der Scheinwiderstand ist ebenfalls eine wichtige Rechengröße in der Theorie der Wechselstromtechnik. Sind mehrere ohmsche, induktive, kapazitive oder daraus kombinierte Verbraucher an eine Wechselspannungsversorgung angeschlossen, so können diese in ihrer Gesamtwirkung auf die Spannungsversorgung und im Rahmen des hier beschriebenen Verfahrens als ein Verbraucher zusammengefasst werden, dessen Stromaufnahme durch die Gleichung (4) mit geeigneten Werten für Z und phi beschrieben ist. Es gilt, dass immer dann wenn der Phasenwinkel phi ungleich Null ist, im Nulldurchgang der Spannung ein von Null verschiedener Strom durch den Verbraucher fließt. Dies ist von zentraler Bedeutung im Betrieb des hier beschriebenen, Verfahrens und zur Abgrenzung gegenüber anderen Verfahren. In dem erfindungsgemäßen Verfahren wird durch dem Fachmann bekannte geeignete Maßnahmen selektiv die Wirkleistung in dem (den) angeschlossenen Verbrauchern) in beliebigen Zeitpunkten der Sinusschwingung verändert, so dass ein geeigneter "Demodulator" diese "Modulation" auch dann noch erkennen kann, wenn der Momentanwert des Stromes I (t) zur Zeit der Austastung verschieden von Null sein sollte.

Erfindungsgemäß wird somit erreicht, dass eine Datenübertragung mit beliebigen - sowohl ohmschen wie auch induktiven und/oder kapazitiven - an das Netz angeschlossenen Verbrauchern möglich wird, während in den nach dem gegenwärtigen Stand der Technik bestehenden Systemen nur ohmsche Lasten - spezielle Glühbirnen - betrieben werden können (vgl. EP 1 134 910 A2). Somit wird auf die erfindungsgemäße Weise die bei dem gegenwärtigen Stand der Technik erforderliche Einschränkung auf einen speziellen Anwendungsfall - nur bei ohmschen Lasten - bei der hier beschriebenen Wirkleistungsumtastung aufgehoben. Das erfindungsgemäße Verfahren ist in der Lage, eine Datenübertragung auch dann noch vorzunehmen, wenn beliebige induktive oder kapazitive Lasten - wie beispielsweise Elektromotoren, Küchengeräte, elektrisch betriebene Werkzeuge, Leuchtstofflampen, Elektronikgeräte wie PCs, Fernseher und HiFi-Anlagen - an dem Netzstrang betrieben werden, auf dem die Datenübertragung vorgenommen werden soll.

Unter "Modulation" wird also im Weiteren die Veränderung der Wirkleistung in dem (den) angeschlossenen Verbraucher(n) zu mindestens einem beliebigen Zeitpunkt der Sinusschwingung des Versorgungsstroms bezeichnet. Dazu wird der Momentanwert der Spannung am Verbraucher auf einen veränderten Wert gezwungen. Der "Modulator" enthält die dafür erforderliche Schaltungstechnik, die einerseits die Spannungsänderung schnell genug durchführen kann und andererseits den zum Zeitpunkt der Umtastung fließenden Scheinstrom führen kann. Dies verhindert die Verfälschung der Modulation durch Blindströme, wie sie sich dem Fachmann als Problem stellt.

Betreffend das erfindungsgemäße Verfahren sind unterschiedliche Informationsträger geeignet:
Analoge Information kann bei diesem Verfahren über die Höhe von Umtastungen oder über deren Dauer codiert werden. Digitale Information kann bei diesem Verfahren über das Vorhandensein oder nicht Vorhandensein von Austastungen zu bestimmten Zeitpunkten codiert werden. Die Übertragung analoger oder digitaler Informationen durch Variation der Umtastungsintensität und /oder Umtastungsdauer erfolgt, indem zwecks Übermittlung von Informationen über die Energieversorgungsleitung Wirkleistung gezielt, das heißt in auswertbarer Weise, wie oben beschrieben, variiert wird. Zur Übermittlung der Informationen werden hierbei Variationen des Momentanwertes der Wirkleistung auf ein beliebiges Maß als Vergrößerung oder Verkleinerung durchgeführt, wobei die Höhe der Variation eine analoge Größe und das Vorhandensein einer Variation überhaupt eine digitale Information codieren kann. Unter "analoger Information" wird hierbei verstanden, dass die Dauer und/oder Intensität der Variation selbst eine numerisch auswertbare Größe darstellt. Unter "digitaler Information" wird hierbei verstanden, dass der Umstand der Information an sich eine auswertbare Größe darstellt.

Es können auch mehrere Modulatoren bei dem Verfahren verwendet werden, indem den einzelnen Modulatoren Phasenfenster zugewiesen werden, innerhalb derer sie ihre jeweilige Modulation durchführen können. Das erfindungsgemäße Verfahren ermöglicht somit auch das gleichzeitige Betreiben mehrerer Modulatoren, die hintereinander geschaltet jeweils ihre eigene Aufgabe simultan erledigen, indem jeder Modulator ein eigenes Zeitfenster innerhalb einer Sinusperiode zugewiesen bekommt, während dessen er Umtastungen vornehmen darf. Insbesondere durch Zuweisung von Phasenfenstern zu den einzelnen Modulatoren ist ein solcher gleichzeitiger Betrieb mehrerer hintereinander liegender, also hintereinander geschalteter Modulatoren möglich.

Durch geeignete Wahl der Umtastungszeitpunkte, worunter Modulationszeitpunkte verstanden werden, erfolgt eine Kontrolle der verursachten Störaussendung der sonstigen Verbraucher in das betreffende Stromnetz. Dies geschieht, indem die Umtastung der Wirkleistung im Sinne der oben beschriebenen Modulation zu beliebigen Zeitpunkten im Verlauf der Sinusschwingung vorgenommen werden kann, wobei durch geeignete Wahl der Austastungszeitpunkte die dadurch erzeugte Störeinprägung (elektromagnetische Störaussendung) so beeinflusst werden kann, dass sie unterhalb eines gewünschten Schwellwertes bleibt.

Beispielsweise ist es unvorteilhaft, Modulation in Form von Erhöhung des Momentanwertes der Wirkleistung im Scheitelpunkt der Netzsinusspannung vorzunehmen, weil dadurch sehr hohe Stromspitzen in den angeschlossenen Verbrauchern auftreten können, die zu einer unzulässig hohen elektromagnetischen Störaussendung führen würden.

Dadurch wird es insgesamt möglich, durch geeignete Wahl der Modulation analoge oder digitale Informationen unter Wahrung praktischer Anforderungen (wie Eingrenzung von elektromagnetischer Störaussendung, Beibehaltung der erforderlichen Leistung der Verbraucher, Immunität gegenüber Blindströmen) über eine normale Energieversorgungsleitung zu übertragen, an die beliebige Verbraucher angeschlossen sein können.

Der Modulator kann in einer Einheit aufgebaut sein oder auch in mehreren verteilten Einheiten, die an unterschiedlichen Stellen der Leitung untergebracht sein können. Wenn der für das Verfahren erforderliche Modulator in einer Einheit aufgebaut ist, ist eine Platz sparende und gut strukturierte Verkabelung des Systems möglich.

Wenn für das Verfahren ein oder mehrere Modulatoren in mehreren verteilten Einheiten, die an unterschiedlichen Stellen der Leitung untergebracht sind, verwendet werden, dann können die unterschiedlichen Teile, die jeweils zusammengenommen einen Modulator darstellen, an für den Energiefluss günstigeren Punkten der Versorgungsleitung angebracht werden.

Eine Verarbeitung empfangener Daten kann auch bereits in der Technik des Demodulators integriert sein, beispielsweise ein Microcontroller mit kombinierten Aufgaben im Demodulator, wie Decodierung empfangener Daten und Weiterverarbeitung, wie Bewertung, Interpretation, Ausgabe als Schalt- Steuer- oder Datensignal. Dies bringt den Vorteil mit sich, dass beispielsweise die Steuereinheit eines Verbrauchers, wie beispielsweise eine Lampe mit Dimmer, gleichzeitig auch einen Empfangsteil umfassen kann und beispielsweise somit fernsteuerbar wird.

Die Verarbeitung der empfangenen Daten kann auch außerhalb der Technik des Demodulators erfolgen.

Ein Demodulator kann mit einem Verbraucher gekoppelt sein, um diesen anhand von einem Modulator übermittelter Informationen zu steuern oder alleinstehend an die Leitung angeschlossen sein, um die empfangenen Informationen in sinnvoller Weise weiterzugeben, beispielsweise Funk- oder Infrarotsignal, akustisches oder optisches Signal o.ä.. Der Modulator kann mit beliebigen Eingabegeräten von einem einfachen Ein-/Aus-Schalter bis hin zu komplexen datentechnischen Einrichtungen gekoppelt werden, die die zu übertragenden Informationen bereitstellen. Ein Demodulator kann mit beliebigen weiterverarbeitenden Einrichtungen gekoppelt werden, die die empfangenen Informationen umsetzen oder weiterverarbeiten.

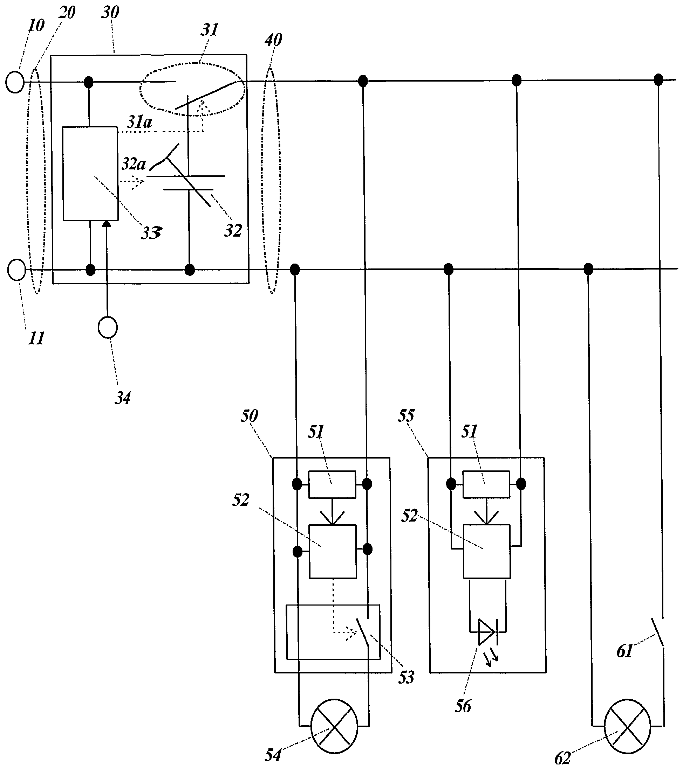

Spezielle Ausführungsbeispiele werden durch die Figur beschrieben. Hierbei zeigt Fig.1 ein Blockschaltbild eines anspruchsgemäßen Systems.

Fig.1 zeigt einen beispielhaften Aufbau eines anspruchsgemäßen Systems, wobei eine Sendeeinheit (Modulator 30) und verschiedene Arten von Empfangseinheiten (Demodulatoren) und Verbrauchern dargestellt sind.

Hierbei stellen 10 und 11 die Einspeisepole eines Verbraucherstromkreises dar, wie es beispielsweise ein abgesicherter Stromkreis in einer Hausinstallation sein könnte.

In Fig. 1 ist außerdem eine beispielhafte Schaltung dargestellt, wie ein Modulator 30 aufgebaut werden kann, um die erfindungsgemäßen Wirkleistungsvariationen durchführen zu können. Der Modulator 30 wird hierfür mit Hilfe der mindestens zweiadrigen Zuleitung 40 mit den Verbrauchern 54, 62 verbunden, wobei mindestens ein Verbraucher 62 direkt mit den Zuleitungen 40 verbunden sein kann und/oder mindestens ein Verbraucher 54 über eine weitere Schaltung der Empfangseinheit 50 mit der Zuleitung 40 verbunden sein kann.

Der Modulator 30 besteht aus einem Umschalter 31, einer einstellbaren oder festen Spannungsquelle 32 und einer Steuereinheit 33, die die beschriebene Modulation durch Wirkleistungsumtastungen zu den beabsichtigten Zeitpunkten der Sinuswelle der Netzwechselspannung auslöst.

Der Umschalter 31 wird hierbei vorzugsweise als elektronischer Umschalter 31, beispielsweise als Halbleiterschaltung, ausgeführt, um schnell, präzise und verschleißfrei umschalten zu können.

Die Steuereinheit 33 kann beispielsweise aus einem Mikrocontroller und einer Schaltung zu dessen Stromversorgung bestehen, wie sie dem Fachmann beide geläufig sind, um die beschriebene Wirkung zu erzeugen.

Die Steuereinheit 33 erfasst den zeitlichen Kurvenverlauf der an den Einspeisepolen 10 und 11 eingespeisten Netzwechselspannung zum Beispiel mit einem Schwellwertschalter und/oder mit einem mit der Netzwechselspannung synchronisierten Zeitgeber und steuert somit in den konstruktiv oder per Software festgelegten Phasenwinkeln der Sinuswelle den Umschalter 31 so an (vgl. Wirkungslinie 31a), dass die Verbindung zwischen der Verbraucherzuleitung 40 und der zuführenden Einspeiseleitung 20 unterbrochen wird und stattdessen die Spannungsquelle 32 die auf der Verbraucherzuleitung 40 herrschende Spannung bestimmt.

Die Spannungsquelle 32 kann beispielsweise als eine Batterie, als ein ausreichend großer Kondensator mit einer geeigneten Ladeschaltung oder auch als elektronische Netzteilschaltung ausgeführt sein. In einem speziellen System kann der Spannungsquelle 32 auch der Wert Null zugewiesen sein.

Nach einer konstruktiv oder per Software festgelegten Zeit schaltet die Steuereinheit 33 die Verbraucherzuleitung 40 dann wieder auf die Einspeiseleitung 20.

Somit wird erreicht, dass zu einem beliebigen Zeitpunkt des Sinusverlaufs der Netzwechselspannung die Kontrolle der Verbraucherzuleitung 40 von den Einspeiseanschlüssen 10, 11 abgekoppelt und für eine beliebig wählbare Zeitdauer an die einstellbare oder feste Spannungsquelle 32 übergeben werden kann. Durch Wahl einer kurzen, solchen Umtastdauer und einem geeigneten Abstimmen des Phasenwinkels, bei dem dies geschieht und der Spannung, die zu diesem Zeitpunkt durch die einstellbare oder feste Spannungsquelle 32 der Verbraucherzuleitung 40 aufgezwungen wird, kann die Störbeeinflussung von den an die Verbraucherzuleitung 40 angeschlossenen Verbrauchern 54, 62 minimiert werden, während hierdurch zugleich die Auslesbarkeit einer solchen Information maximiert werden kann.

Als hierfür besonders günstige Werte haben sich Umtastungen mit Spannungssprüngen von ca. 20V bei einem Momentanwert der Sinusspannung zwischen 20V und 60V und mit einer Dauer von 10 bis 100 Mikrosekunden erwiesen, wobei der Fachmann aber auch größere bzw. kleinere Werte verwenden kann.

Die Spannungsquelle 32 ist während der Zeit des Umtastens der Summe der auf der Verbraucherzuleitung 40 fließenden Blindströme sowie dem durch ihre Spannung und die Impedanz der angeschlossenen Verbraucher 54, 62 verursachten Strom ausgesetzt. Durch entsprechend niederohmige Auslegung kann sie so konstruiert werden, dass sie diese Ströme problemlos treiben kann und so der Modulator 30 jederzeit die vollständige Kontrolle über die Verbraucherzuleitung 40 ausübt, wodurch mit Hilfe des Modulators 30 letztendlich auch der Bediener einer solchen Schaltung die vollständige Kontrolle über die auf diesem Wege über die Verbraucherzuleitung 40 übermittelbaren Informationen ausüben kann.

Dadurch wird das Datensignal einerseits auch bei hohen Blind- und Wirkstromanteilen auf der Verbraucherzuleitung 40 nicht verfälscht und andererseits verfälscht der Modulator 30 durch die kurzzeitige Umtastung mit einem bezogen auf die Nennspannung des Netzes geringen Spannungssprung nicht das Verhalten der an die Verbraucherzuleitung 40 angeschlossenen Verbraucher 54, 62, so dass beispielsweise eine Glühbirne als Verbraucher 54, 62 auch während einer Datenmodulation über mehrere oder viele Sinuswellen auf der Verbraucherzuleitung 40 keine erkennbaren Helligkeitsschwankungen zeigt. Dies bewirkt, dass erfindungsgemäß nun auch solche Verbraucher mit Informationen über ihre Zuleitungen versorgt werden können, die dafür bekannt sind, empfindlich auf Veränderungen ihrer Leistungsversorgung zu reagieren, oder dem Bediener durch eine solche Verhaltensänderung unmittelbar eine derartige Veränderung ihrer Leistungsversorgung anzeigen würden, wie es beispielsweise bei einer Glühbirne der Fall ist.

Ist die Spannungsquelle 32 außerdem noch einstellbar ausgelegt, so kann deren Spannung auch durch die Steuereinheit 33 festgelegt werden, wie dies durch die Wirkungslinie 32a dargestellt ist.

Ferner kann der Modulator 30 auch über eine oder mehrere Datenschnittstellen 34 verfügen, über die er Steuerinformationen von beispielsweise externen Steuersystemen, Datengeräten oder Sensoren erhalten kann, deren Informationsgehalt er nach einem konstruktiv oder per Software festgelegten, funktionalen Zusammenhang in eine Modulation auf die Verbraucherzuleitung 40 umsetzt.

Beispielhafte Datenschnittstellen könnten für die Übernahme von Daten aus einfachen Schaltern, aus Gateways, die eine Verbindung zu anderen Steuersystemen bereitstellen, aus Fernsteuersignalen per Funk oder Infrarot oder die Übernahme von Informationen aus EDV-Anlagen konstruiert werden, wie sie dem Fachmann zur Dateneinspeisung bekannt sind.

In Fig. 1 sind beispielhaft drei an die Verbraucherzuleitung 40 angeschlossene Teilnehmer dargestellt: die Empfangseinheit 50, die Empfängereinheit 55 und der Schalter 61. Außerdem sind die Verbraucher 54, 62 dargestellt, die gemeinsam eine auf den empfangenen Daten beruhende Schalt- bzw. Steuerwirkung bereitstellen.

Beispielhaft ist hierfür eine Empfangseinheit 50 gezeigt, die mit einem Stellglied 53 verbunden ist. Der Teilnehmer 61 ist ein herkömmlicher Schalter, der eine an die Verbraucherzuleitung 40 als Verbraucher angeschlossene Glühbirne 62 schaltet.

Die Kombination von 61 und 62 symbolisiert einen beliebigen konventionellen Verbraucher 54, der von dem System unbeeinflusst wie an einer normalen, d.h. nichtmodulierten Verbraucherzuleitung 40, betrieben werden kann.

Innerhalb der Empfangseinheit 50 ist ein Wirkleistungsverbraucher 51 mit der an der Verbraucherzuleitung 40 anliegenden Netzwechselspannung verbunden.

Eine Decodiereinheit 52 erfasst den Momentanwert der in dem Wirkleistungsverbraucher 51 umgesetzten Wirkleistung und bewertet dessen zeitlichen Verlauf so, dass nach einer konstruktiv oder per Software festgelegten Funktion die durch die Modulation bedingten Abweichungen dieses Verlaufs von der normalen Sinusform der Netzwechselspannung erkannt werden.

Nach einem weiteren Verfahren bzw. mit einem Datenprotokoll filtert die Auswerteeinheit anschließend die für sie bestimmten Informationen aus und steuert in Abhängigkeit von deren festgelegter Bedeutung das Stellglied 53 an, das einen Verbraucher 54 wie beispielsweise eine Glühbirne oder auch einen beliebigen anderen Verbraucher ein- und ausschalten kann, so dass dieser über die auf der Verbraucherzuleitung 40 durchgeführte Datenmodulation gezielt fernsteuerbar wird. Andere Beispiele solcher Stellglieder können auch Dimmer oder vergleichbare die Wirkung eines Verbrauchers beeinflussende Vorrichtungen sein.

Auch andere Beeinflussungsvorrichtungen, die beispielsweise das Lampendimmen oder die Beeinflussung der Geschwindigkeit von beispielsweise Lüftermotoren oder sonstige Wirkungen elektrischer Verbraucher oder elektromechanischer Stellglieder beeinflussen, kann hierdurch erfindungsgemäß ferngesteuert werden, indem sie bzw. deren Stellglied entsprechend dem Stellglied 53 über die Decodiereinheit 52 mit der Empfangseinheit 50 verbunden werden.

Die Erfassung des Momentanwertes der in dem Wirkleistungsverbraucher 51 freigesetzten Wirkleistung kann zum Beispiel durch eine analog arbeitende elektronische oder elektromechanische Messvorrichtung oder auch in einem leistungsfähigen Mikrocontroller durch Digitalisieren der Spannungswerte auf der Verbraucherzuleitung 40 und numerische Auswertung derselben erfolgen, wobei im letzten Fall der Wirkleistungsverbraucher 51 nicht mehr gegenständlich in der Schaltung vorhanden sein muss, sondern dessen physikalisches Verhalten in einem von der Decodiereinheit 52 beinhalteten Mikrocontroller beispielsweise numerisch nachgebildet werden kann.

Als Beispiel eines Teilnehmers - ohne Verbraucher oder Stelleinheit 53 - ist die Empfängereinheit 55 dargestellt.

Diese Empfängereinheit 55 beinhaltet nur die von der Empfangseinheit 50 bekannten und dort mit einem Stellglied 53 verbundenen Wirkleistungsverbraucher 51 und Decodiereinheit 52, wobei nun die Decodiereinheit 52 die von der Verbraucherzuleitung 40 empfangenen Daten nach einem festgelegten Schema umsetzt und selektiv oder umfassend an ein anderes Medium, wie beispielsweise an eine Infrarot-Sendediode, weiterleitet, deren Signale von einer damit korrespondierenden Vorrichtung, wie beispielsweise dem Infrarotempfänger eines Fernsehgerätes, ausgewertet werden können. Weitere Schnittstellen, an die von einer solchen Empfängereinheit 55 empfangene Daten weitergeleitet werden können, sind beispielsweise Funksysteme, Rechnersysteme, Gateways anderer Steuersysteme oder gerätespezifische Schnittstellen, so dass die Verarbeitung im Sinne einer Auswertung der Daten an einer anderen Stelle, also außerhalb der Empfängereinheit 55 erfolgen kann.

**Patentansprüche**

1. Verfahren zur Modulation der Wirkleistung durch mindestens einen Modulator (30) zur Übermittlung von Informationen über eine Energieversorgungsleitung (40) durch selektive Veränderung der Wirkleistung in mindestens einem angeschlossenen Verbraucher (54, 62) in einem Wechselspannungsenergieversorgungsnetz zu beliebigen Zeitpunkten einer Sinusschwingung, umfassend eine niederohmige Spannungsquelle (32), **dadurch gekennzeichnet, dass** zur Übermittlung der Informationen Variationen des Momentanwertes der Wirkleistung auf ein von der Spannungsquelle (32) abhängiges beliebiges Maß durchgeführt werden, wobei der Modulator (30) aus einem Umschalter (31), der Spannungsquelle (32) und einer Steuereinheit (33) besteht, wobei die Steuereinheit (33) den zeitlichen Kurvenverlauf der eingespeisten Netzwechselspannung erfasst und in festgelegten Phasenwinkeln der Sinuswelle den Umschalter (31) so ansteuert, dass die Verbindung zwischen einer Verbraucherzuleitung (40) und einer Einspeiseleitung (20) unterbrochen wird und stattdessen die Spannungsquelle (32) die auf der Verbraucherzuleitung (40) herrschende Spannung bestimmt und die Steuereinheit (33) die Verbraucherzuleitung (40) nach einer konstruktiv oder per Software festgelegten Zeit dann wieder von der Spannungsquelle (32) auf die Einspeiseleitung (20) schaltet, wobei eine Kontrolle einer verursachten Störaussendung durch geeignete Wahl der Umtastungszeitpunkte erfolgt, in denen eine Verbindung zwischen einer Verbraucherzuleitung (40) und einer Einspeiseleitung (2) unterbrochen wird und stattdessen eine Spannungsquelle (32) die auf der Verbraucherzuleitung (40) anliegende Spannung bestimmt und umgekehrt (Seite 10, Zeile 32 bis Seite 11 Zeile 10), und wobei eine Störung durch die Wirkleistungsvariation entsteht und sich auf die angeschlossenen Verbraucher (54, 62) auswirkt und die Umtastzeitpunkte so gewählt werden, dass die Störung unterhalb eines gewünschten Schwellwertes bleibt.

2. Verfahren nach Anspruch 1, **dadurch gekennzeichnet, dass** ein gleichzeitiger Betrieb mehrerer hintereinander geschalteter Modulatoren (30) erfolgt.

3. Verfahren nach einem der zuvor genannten Ansprüche, **dadurch gekennzeichnet, dass** der für das Verfahren erforderliche Modulator (30) in einer Einheit aufgebaut ist.

4. Verfahren nach einem der zuvor genannten Ansprüche, **dadurch gekennzeichnet, dass** für das Verfahren mehrere Modulatoren (30) in mehreren verteilten Einheiten, die an unterschiedlichen Stellen der Verbraucherzuleitung (40) untergebracht sind, verwendet werden.

5. Verfahren nach einem der zuvor genannten Ansprüche, **dadurch gekennzeichnet, dass** die Verarbeitung der empfangenen Daten bereits in der Technik des Demodulators (50, 55) erfolgt.

6. Verfahren nach einem der zuvor genannten Ansprüche, **dadurch gekennzeichnet, dass** die Verarbeitung der empfangenen Daten außerhalb der Technik des Demodulators (50, 55) erfolgt.

7. Modulator (30) umfassend eine niederohmige Spannungsquelle (32), einen Umschalter (31) und eine Steuereinheit (33), wobei die Steuereinheit (33) den zeitlichen Kurvenverlauf der an Einspeisepolen (10, 11) eingespeisten Netzwechselspannung erfasst und in festgelegten Phasenwinkeln der Sinuswelle den Umschalter (31) zur Unterbrechung der Verbindung zwischen einer Verbraucherzuleitung (40) und einer Einspeiseleitung (20) ansteuert, wobei während der Unterbrechung die Spannungsquelle (32) die auf der Verbraucherzuleitung (40) herrschende Spannung bestimmt und die Steuereinheit (33) die Verbraucherzuleitung (40) nach einer konstruktiv oder per Software festgelegten Zeit dann wieder von der Spannungsquelle (32) auf die Einspeiseleitung (20) schaltet, wobei durch die Änderung der Wirkleistung Informationen von der Steuereinheit (33) an die angeschlossenen Verbraucher (54, 62) übermittelt werden und eine Kontrolle einer verursachten Störaussendung durch geeignete Wahl der Umtastungszeitpunkte erfolgt, in denen eine Verbindung zwischen einer Verbraucherzuleitung (40) und einer Einspeiseleitung (2) unterbrochen wird und stattdessen die niederohmige Spannungsquelle (32) die auf der Verbraucherzuleitung (40) anliegende Spannung bestimmt und umgekehrt (Seite 10, Zeile 32 bis Seite 11 Zeile 10), und wobei eine Störung durch die Wirkleistungsvariation entsteht und sich auf die angeschlossenen Verbraucher (54, 62) auswirkt und die Umtastzeitpunkte so gewählt werden, dass die Störung unterhalb eines gewünschten Schwellwertes bleibt.

8. Modulator nach Anspruch 7, **dadurch gekennzeichnet, dass** er die niederohmige Spannungsquelle (32) in Gestalt einer Batterie oder eines Kondensators, oder einer elektronischen Netzteilschaltung umfasst, deren Spannung zum Zeitpunkt des Zuschaltens der Zuleitung (40) aufgezwungen werden kann.

9. Modulator nach Anspruch 8, **dadurch gekennzeichnet, dass** er die niederohmige Spannungsquelle (32), die Spannungssprünge von etwa 20V bei einem Momentanwert der Sinuswelle zwischen 20V und 60V der Zuleitung (40) aufzwingen kann, umfasst.

10. Modulator nach Anspruch 9, **dadurch gekennzeichnet, dass** die Steuereinheit (33) den zeitlichen Kurvenverlauf der an den Einspeisepolen (10, 11) eingespeisten Netzwechselspannung mit einem Schwellwertschalter und/oder mit einem mit der Netzwechselspannung synchronisierten Zeitgeber erfasst.

11. Modulator nach einem der Ansprüche 7 bis 10, **dadurch gekennzeichnet, dass** die Steuereinheit (33) die Verbraucherzuleitung (40) nach einer konstruktiv oder per Software festgelegten Zeit dann wieder von der Spannungsquelle (32) auf die Einspeiseleitung (20) schaltet.

12. Verwendung des Modulators nach den Ansprüchen 7 bis 11 im abgesicherten Stromkreis einer Hausinstallation.

**Claims**

1. Method for modulating the effective power via at least one modulator (30) for the transmission of information, via a power supply line (14), through the selective alteration of the effective power in at least one connected consumer (54, 62) in an alternating current (AC) power supply network, at any desired times of a sine curve, including a low-resistance voltage source (32), **characterized in that** for the transmission of the information, variations of the instantaneous value of the effective power to any desired extent dependent on the voltage source (32) are carried out, wherein the modulator (30) consists of a changeover switch (31), the voltage source (32), and a control unit (33), wherein the control unit (33) detects the temporal curve profile of the supplied mains AC voltage and, in specified phase angles of the sine curve, activates the changeover switch (31) such that the connection between a consumer supply line (40) and a feed line (20) is interrupted, and instead, the voltage source (32) defines the voltage present on the consumer supply line (40) and the control unit (33) switches the consumer supply line (40) after a time defined constructively or via software from the voltage source (32) back to the feed line (20), wherein a control of an emitted interference is carried out through a suitable selection of the keying times in which a connection between a consumer supply line (40) and a feed line (2) is interrupted and instead a voltage source (32) defines the voltage present on the consumer supply line (40) and vice versa (page 10, line 32, to page 11, line 10), and wherein an interference occurs through the variation of the effective power and has influence on the connected consumers (54, 62), and the keying times are selected such that the interference is kept below a desired threshold value.

2. The method according to claim 1, **characterized in that** a simultaneous operation of multiple modulators (30), connected one behind the other, is effected.

3. The method according to one of the preceding claims, **characterized in that** the modulator (30) required for the method is constructed in one unit.

4. The method according to one of the preceding claims, **characterized in that** multiple modulators (30) are used for the method in multiple distributed units, which are disposed in different places of the consumer supply line (40).

5. The method according to one of the preceding claims, **characterized in that** the processing of the received data already occurs in the technology of the demodulator (50, 55).

6. The method according to one of the preceding claims, **characterized in that** the processing of the received data occurs outside the technology of the demodulator (50, 55).

7. A modulator (30), including a low-resistance voltage source (32), a changeover-switch (31) and a control unit (33), wherein the control unit (33) detects the temporal curve profile of the mains AC voltage fed via the feed poles (10, 11) and activates the changeover-switch (31) in predetermined phase angles of the sine wave to interrupt the connection between a consumer supply line (40) and a feed line (20), wherein, during the interruption, the voltage source (32) defines the voltage present at the consumer feed line (40), and the control unit (33) switches the consumer supply line (40) after a time defined constructively or via software from the voltage source (32) back to the feed line (20), wherein information is transmitted from the control unit (33) to the connected consumers (54, 62) due to the change of the effective power and a control of an emitted interference is effected through a suitable selection of the keying times, in which a connection between the consumer supply line (40) and a feed line (2) is interrupted and instead the low-resistance voltage source (32) defines the voltage present on the consumer supply line (40) and vice versa (page 10, line 32, to page 11, line 40), and wherein an interference occurs through the variation of effective power and has an influence on the connected consumers (54, 62) and the keying times are selected such that the interference is kept below a desired threshold value.

8. Modulator according to claim 7, **characterized in that** it includes the low-resistance voltage source (32) in the form of a battery or a capacitor or an electronic power supply circuit, the voltage of which can be forced on to the supply line (40) at the time of connecting.

9. Modulator according to claim 8, **characterized in that** it includes the low-resistance voltage source (32), which is capable of forcing voltage jumps of approximately 20 V on to the supply line (40) at an instantaneous value of the sine wave between 20 V and 60 V.

10. Modulator according to claim 9, **characterized in that** the control unit (33) detects the temporal curve profile of the mains AC voltage fed via the feed poles (10, 11) with a threshold switch and/or with a timer synchronized with the mains AC voltage.

11. Modulator according to one of claims 7 to 10, **characterized in that** the control unit (33) switches the consumer supply line (40) from the voltage source (32) back to the feed line (20) after a time defined constructively or via software.

12. Use of a modulator according to claims 7 to 11 in the protected electric circuit of a domestic installation.

**Revendications**

1. Procédé pour moduler la puissance active à l'aide d'au moins un modulateur (30) afin de transmettre des informations par l'intermédiaire d'une ligne d'alimentation en énergie (40) par une variation sélective de la puissance active dans au moins un consommateur (54, 62) connecté dans un réseau d'alimentation en énergie à tension alternative à des moments quelconques d'une oscillation sinusoïdale, comprenant une source de tension à faible résistance (32), **caractérisé en ce que** des variations de la valeur instantanée de la puissance active à un niveau arbitraire dépendant de la source de tension (32) sont réalisées pour transmettre les informations, le modulateur (30) étant constitué d'un commutateur (31), de la source de tension (32) et d'une unité de commande (33), ladite unité de commande (33) enregistrant l'allure temporelle de la courbe de la tension alternative de réseau injectée et actionnant le commutateur (31) dans des angles de phase déterminés de l'onde sinusoïdale de telle sorte que la liaison entre une ligne de consommateur (40) et une ligne d'alimentation électrique (20) est interrompue et qu'à la place, la source de tension (32) détermine la tension régnant sur la ligne de consommateur (40) et l'unité de commande (33) fait ensuite repasser la ligne de consommateur (40), après une durée fixée par un logiciel ou la construction, de la source de tension (32) à la ligne d'alimentation électrique (20), un contrôle d'une émission parasite provoquée étant effectué grâce à un choix approprié des moments de détection pendant lesquels une liaison entre une ligne de consommateur (40) et une ligne d'alimentation électrique (20) est interrompue et une source de tension (32) détermine la tension appliquée sur la ligne de consommateur (40) et inversement (de la page 10, ligne 32 à la page 11, ligne 10), une perturbation surgissant à cause de la variation de la puissance active et agissant sur les consommateurs (54, 62) connectés et les moments de détection étant sélectionnés de telle sorte que la perturbation reste en dessous d'une valeur seuil souhaitée.

2. Procédé selon la revendication 1, **caractérisé en ce que** se produit un fonctionnement simultané de plusieurs modulateurs branchés en série les uns derrière les autres (30).

3. Procédé selon l'une quelconque des revendications précédentes, **caractérisé en ce que** le modulateur (30) requis pour le procédé est construit comme une unité.

4. Procédé selon l'une quelconque des revendications précédentes, **caractérisé en ce que** plusieurs modulateurs (30) installés dans plusieurs unités réparties en différents endroits de la ligne de consommateur (40) sont utilisés pour le procédé.

5. Procédé selon l'une quelconque des revendications précédentes, **caractérisé en ce que** le traitement des données reçues a lieu déjà dans la partie technique du démodulateur (50, 55).

6. Procédé selon l'une quelconque des revendications précédentes, **caractérisé en ce que** le traitement des données reçues a lieu en dehors de la partie technique du démodulateur (50, 55).

7. Modulateur (30) comprenant une source de tension à faible résistance (32), un commutateur (31) et une unité de commande (33), ladite unité de commande (33) enregistrant l'allure temporelle de la courbe de la tension alternative de réseau injectée aux pôles d'injection (10, 11) et actionnant le commutateur (31) dans des angles de phase déterminés de l'onde sinusoïdale pour interrompre la liaison entre une ligne de consommateur (40) et une ligne d'alimentation électrique (20), pendant cette interruption, la source de tension (32) déterminant la tension régnant sur la ligne de consommateur (40) et l'unité de commande (33) fait ensuite repasser la ligne de consommateur (40), après une durée fixée par un logiciel ou la construction, de la source de tension (32) à la ligne d'alimentation électrique (20), la modification de la puissance active permettant de transmettre des informations depuis l'unité de commande (33) vers les consommateurs (54, 62) connectés et un contrôle d'une émission parasite provoquée étant effectué grâce à un choix approprié des moments de détection pendant lesquels une liaison entre une ligne de consommateur (40) et une ligne d'alimentation électrique (20) est interrompue et la source de tension (32) détermine la tension appliquée sur la ligne de consommateur (40) et inversement (de la page 10, ligne 32 à la page 11 ligne 10), une perturbation surgissant à cause de la variation de la puissance active et agissant sur les consommateurs (54, 62) connectés et les moments de détection étant sélectionnés de telle sorte que la perturbation reste sous une valeur seuil souhaitée.

8. Modulateur selon la revendication 7, **caractérisé en ce qu'**il comporte la source de tension à faible résistance (32) sous forme d'une batterie, ou d'un condensateur ou d'un bloc d'alimentation électronique dont la tension au moment de la mise en circuit de la conduite d'alimentation (40) peut être forcée.

9. Modulateur selon la revendication 8, **caractérisé en ce qu'**il comporte la source de tension à faible résistance (32) qui peut forcer des sauts de tension d'environ 20 V à une valeur instantanée de l'onde sinusoïdale comprise entre 20 et 60 V de la ligne d'alimentation (40).

10. Modulateur selon la revendication 9, **caractérisé en ce que** l'unité de commande (33) enregistre l'allure temporelle de la courbe de la tension alternative de réseau injectée aux pôles d'injection (10, 11) avec un commutateur de valeur seuil et/ou un minuteur synchronisé avec la tension alternative de réseau.

11. Modulateur selon l'une des revendications 7 à 10, **caractérisé en ce que** l'unité de commande (33) fait ensuite repasser la ligne de consommateur (40), après une durée fixée par un logiciel ou de manière constructive, de la source de tension (32) à la ligne d'alimentation électrique (20).

12. Utilisation du modulateur selon les revendications 7 à 11 dans le circuit électrique protégé d'une instal-

lation domestique.

**EP 1 794 895 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5491463 A
- EP 1134910 A2
- EP 1756681 A2
- US 2004037221 A1